# EUROPEAN PATENT SPECIFICATION

(11) **EP 4 308 817 B1**
(45) Date of publication and mention of the grant of the patent: **17.12.2025**
(21) Application number: 22713509.2
(22) Date of filing: 16.03.2022
(51) Int. Cl.: F04B 15/02, F04B 9/113, C10G 1/06, C10L 9/08

(54) **PUMPING SYSTEM FOR THERMOCHEMICAL BIOMASS CONVERTERS**
PUMPSYSTEM FÜR THERMOCHEMISCHE BIOMASSEKONVERTER
SYSTÈME DE POMPAGE POUR LES CONVERTISSEURS THERMOCHIMIQUES DE BIOMASSE

(30) Priority: 17.03.2021 US 202163162211 P
(43) Date of publication of application: 24.01.2024
(73) Proprietor: Circlia Nordic ApS, 8210 Aarhus V (DK)
(72) Inventor: JOHANNSEN, Ib, 8000 Aarhus C (DK); PETERSEN, Steffan Haubro, 8210 Aarhus V (DK)
(74) Representative: Patentgruppen A/S
(86) International application number: PCT/DK2022/050050
(87) International publication number: WO 2022/194332

(56) References cited:
- EP-A1- 3 167 029
- WO-A1-2018/115593
- CN-B- 108 005 871
- US-A- 5 658 610
- US-A1- 2010 232 996
- US-A1- 2015 053 075
- US-A1- 2017 204 840
- US-A1- 2018 135 606

## Description

### FIELD OF INVENTION

The invention relates in general to methods and devices for thermochemical biomass conversion and in particular to pumping systems for biomass converters.

### BACKGROUND

Hydrothermal conversion, especially hydrothermal liquefaction (HTL) or hydrothermal carbonization (HTC), requires pumping of highly viscous suspensions of biomass with mineral contaminations (sand and the like) to high pressure, e.g. 50-300 bar. At the end of the conversion process, the resultant product media must be depressurized. In addition, it may be required to oscillate the flow inside the system in order to increase the local flowrate independent of the average flowrate. The robustness and efficiency of hydrothermal conversion is highly dependent on stability of the process and on low maintenance requirements for the conversion system. Accordingly, it is advantageous to provide robust and efficient pumping and depressurization for hydrothermal conversion.

For the pumping step, prior art process have relied on various piston-type pumps. For example, pumps from Putzmeister have been demonstrated in the Dutch HTU process, as shown in Goudnaan, F. & Beld, Bert & Boerefijn, F.R. & Bos, G.M. & Naber, J.E. & Wal, S. & Zeevalkink, Jan. (2008). Thermal Efficiency of the HTU® Process for Biomass Liquefaction. Also so-called Hotmelt pumps driven by air pistons have shown some promise for small-scale / pilot plants. For the depressurization step, prior art process have primarily relied on back pressure valves. However, due to the abrasive nature of water with mineral contaminants and the high pressure drop experienced in the process, this type of valve has a very short lifetime and cannot be used for prolonged periods. Alternatives that have been presented previously include long capillary tubes as described in European patent number EP2994649 and a hydraulic controlled depressurization unit acting more or less as a backwards pump as demonstrated at the Aarhus University hydrothermal conversion pilot plant and as described in European patent number EP 3 167 029. The Aarhus University system applies a single piston pump upstream and a double piston pump downstream relative to the biomass inlet. The downstream pump is able to act as a combined feeding and oscillation pump while the upstream pump acts as a feeding pump.

### SUMMARY

Here we report an improved variant of this combined feeding and depressurization system having reduced capital cost, lower energy consumption, and a generally simplified process.

The invention relates to a pumping system for a hydrothermal biomass converter comprising:
- one or more cylinders each having an inlet end and an outlet end and each having both a low pressure valve and a high pressure valve at both the inlet and the outlet end and each comprising an inner hydraulic actuator segment which is separated from an inlet segment on the inlet end and from an outlet segment on the outlet end by a lower-pressure zone sealed by two or more gaskets and each further comprising an axially displaceable piston fitted with a piston ring which piston is adapted to move back and forth within the hydraulic actuator segment so as to alternately displace volume in the inlet segment when piston movement is towards the inlet end and in the outlet segment when piston movement is towards the outlet end;
- a biomass feed input system in fluid communication with each of the low pressure valves at the inlet ends of the one or more cylinders; and
- a product output system in fluid communication with each of the low pressure valves at the outlet ends of the one or more cylinders.

An advantage of the embodiment may be that an efficient pumping system is obtained. Particularly, by coordinating the operation of the valves, the pumping system may deliver the fluid at high pressure to an attached system while receiving a used fluid at high pressure from the attached system, the piston may move the fluids at minimum resistance. Also, the energy of the received high pressure fluid may be utilized for moving the piston so as to pressurize the received fluid to be pressurized.

As used herein the term "lower-pressure zone" refers to a zone having a lower pressure than the peak pressure of the inner hydraulic actuator segment during normal operation. In an embodiment, the peak pressure in the lower-pressure zone is at least 10% lower than the peak pressure of the inlet segment and outlet segment, such as at least 20% lower than the peak pressure of the inlet segment and outlet segment, such as at least 50% lower than the peak pressure of the inlet segment and outlet segment, such as at least 90% lower than the peak pressure of the inlet segment and outlet segment. In an embodiment, the peak pressure in the lower-pressure zone is at least 10-99% lower than the peak pressure of the inlet segment and outlet segment, such as at least 20-99% lower than the peak pressure of the inlet segment and outlet segment, such as at least 50-99% lower than the peak pressure of the inlet segment and outlet segment, such as at least 90-99% lower than the peak pressure of the inlet segment and outlet segment.

According to an embodiment of the invention, wherein the system adapted to pump a feed stream into and remove a product stream out from a thermochemical biomass converter pressurized to a pressure within the range 100 to 400 bar.

According to an embodiment of the invention, the system having a hydraulic drive system comprising a hydraulic valve with two lines in fluid communication with the hydraulic actuator segment with one line in fluid communication with the hydraulic valve and a hydraulic positive displacement pump mounted on the same axle with a hydraulic motor having equivalent volume displacement capacity as the pump and having one line in fluid communication with the hydraulic valve and were both the hydraulic motor and the hydraulic pump is connected via the same axle to an electrical motor.

According to an embodiment of the invention, the system further comprising sensors to detect piston location and pressure situated at various points in each of the one or more inlet segments and outlet segments.

According to an embodiment of the invention, the system having intake lines to low pressure valves on each of the one or more inlet segments that are turned upwards to allow for accumulated air to escape.

According to an embodiment of the invention, the system having outlet lines to low pressure valves on each of the one or more outlet segments that are turned upwards and connected to a reservoir that provides a gravity flowback of produced liquid.

According to an embodiment of the invention, wherein each of the one or more cylinders is formed from a separate inlet segment and a separate outlet segment each connected to a separate intervening hydraulic actuator segment by flanges.

According to an embodiment of the invention, the system having two cylinders.

According to an embodiment of the invention, the system having four cylinders.

According to an embodiment of the invention, wherein the displacement of liquids is achieved with a piston and a piston ring where the piston ring is a gasket with a tight fit around a smooth/polished piston rod, which has a diameter 0,1 to 2 mm smaller than the cylinder.

According to an embodiment of the invention, wherein the displacement of liquids is achieved with a piston and a piston ring where the piston ring is a gasket located near the head of the piston with a tight fit towards a smooth/polished cylinder surface.

According to an embodiment of the invention, wherein the lower-pressure zone is a no-pressure zone.

The invention further relates to a high pressure thermal processing system comprising the pumping system according to the invention or any of its embodiments.

According to an embodiment of the invention, the system comprising an attached system configured for processing biomass by hydrothermal liquefaction (HTL), hydrothermal carbonization (HTC), or hydrothermal gasification (HTG).

According to an embodiment of the invention, the system comprising an attached system configured for processing biomass by hydrothermal liquefaction.

Thus, in the above embodiment, the system is a hydrothermal liquefaction system.

According to an embodiment of the invention, the system comprises a heater for heating the fluid, e.g. to a temperature of 250 to 450 degree Celsius, such as 300 to 425 degrees Celsius.

### Brief description of the drawings

Figure 1 shows a schematic illustration of the technical features of some embodiments of the invention.
Figure 2 shows another schematic illustration of technical features of some embodiments.
Figure 3 illustrates the operational cycle of one embodiment comprising two cylinders.
Figure 4 shows a piping and instrument design schematic for feedback control of one embodiment of a pumping system of the invention comprising two cylinders.
Figures 5 and 6 show a cross section of valve heads used in some embodiments fitted with both high and low pressure valves in the open state (A - Figure 5) and in the closed state (B - Figure 6).
Figure 7 shows a cross section of a cylinder valve head and the "dead volume" which is inaccessible to displacement by the piston.

### DETAILED DESCRIPTION

The innovative pumping system of the invention exploits a simple principle of fluid mechanics: Because of the extremely low compressibility of water, a comparatively slight volume change brought about by movement of a piston can bring biomass feed slurry to process pressures or reduce product oil to atmospheric or other, lower pressures.

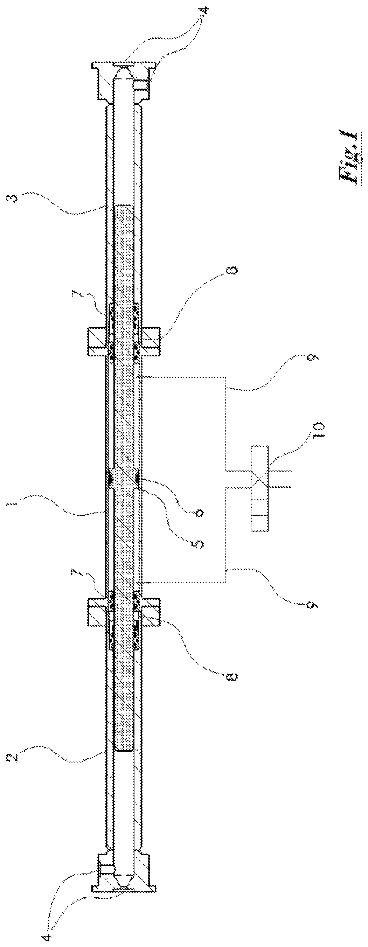

Figure 1 shows a schematic illustration of the technical features of some embodiments of the invention. A pump cylinder comprises three segments - a hydraulic actuator segment 1, an inlet segment 2 and an outlet segment 3. The inlet and outlet segments are fitted with valve heads 4 that support both low pressure and high pressure valves (not shown). An axially displaceable piston 5 fitted with a piston ring 6 spans the length of the hydraulic actuator segment 1 with some extension that passes through two or more gaskets 7 that bound a no-pressure zone 8 into both the inlet segment 2 and the outlet segment 3. Hydraulic fluid lines 9 carry hydraulic fluid that is driven through a hydraulic valve 10 such that the piston is driven by force acting on the piston ring either into the inlet segment 2 or into the outlet segment 3 depending on the setting of the hydraulic valve.

On the outlet side, the outlet segment (3) is filled with product oil through a high pressure valve (not shown). On the inlet side, the inlet segment (2) is filled with biomass feed slurry through a low pressure valve (not shown). With valves closed, movement of the piston (5) towards the inlet segment (2) pressurizes the biomass feed slurry and receives product oil in the outlet segment (3) the biomass feed is taken to high pressure simply by comparatively small volume changes associated with volume displacement affected by the piston (5). The backstroke of the piston (5) then first expels product from the outlet segment (3) through a low pressure valve then, with the low pressure valve closed, further pressurizes the outlet segment (3) for additional input of product oil through a high pressure valve. At this point the biomass feed of the inlet segment depressurizes for further intake of biomass feed. Through careful timing of the opening and closing of high and low pressure valves on the inlet (2) and outlet (3) segments, it is thus possible to provide a simple, energy efficient, semi-continuous pumping system which introduces biomass feed slurry and removes product oil from a hydrothermal conversion system pressurized to 100 - 400 bar.

In some embodiments, the invention provides a pumping system for a thermochemical biomass converter comprising:
- one or more cylinders each having an inlet end and an outlet end and each having both a low pressure valve and a high pressure valve at both the inlet and the outlet end and each comprising an inner hydraulic actuator segment which is separated from an inlet segment on the inlet end and from an outlet segment on the outlet end by a no-pressure zone sealed by two or more gaskets and each further comprising an axially displaceable piston fitted with a piston ring which piston is adapted to move back and forth within the hydraulic actuator segment so as to alternately displace volume in the inlet segment when piston movement is towards the inlet end and in the outlet segment when piston movement is towards the outlet end;
- a biomass feed input system in fluid communication with each of the low pressure valves at the inlet ends of the one or more cylinders; and
- a product output system in fluid communication with each of the low pressure valves at the outlet ends of the one or more cylinders.

In some embodiments the invention provides a pumping system in which the displacement of liquids are achieved with a piston and a piston ring where the piston ring is a gasket with a tight fit around a smooth/polished piston rod, which has a diameter of 0.1 to 2 mm smaller than the cylinder. In alternative embodiments the invention provides a pumping system in which the displacement of liquids is achieved with a piston and a piston ring where the piston ring is a gasket located near the head of the piston with a tight fit towards a smooth/polished cylinder surface.

Typically, a pumping system of the invention is to be adapted to pump a feed stream into and remove a product stream out from a thermochemical biomass converter pressurized to a pressure within the range 100 to 400 bar. In some embodiments, each of the one or more cylinder is formed from a separate inlet segment and a separate outlet segment each connected to a separate intervening hydraulic actuator segment by flanges.

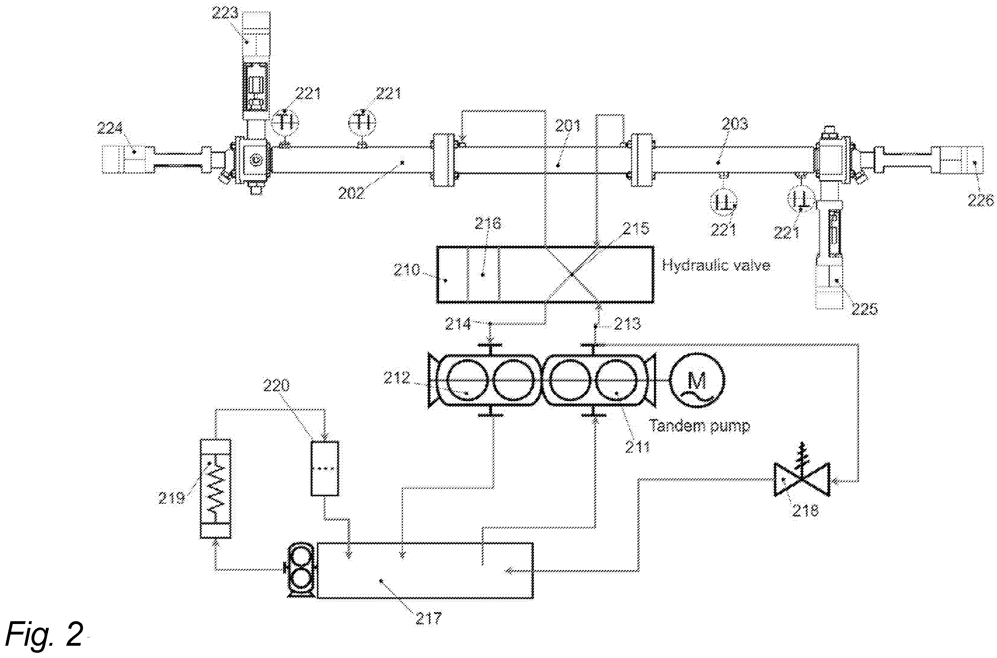

Figure 2 shows another schematic illustration of technical features of some embodiments. The hydraulic drive system used to drive the piston (not shown) through the hydraulic actuator segment (201) comprises a hydraulic positive displacement pump (211) which is mounted on the same axle with and has equivalent volume displacement capacity as a hydraulic motor (212). The pump (211) draws hydraulic fluid from a reservoir (217). The pump (211) has one line (213) and the motor (212) has one line (214) in fluid communication with the hydraulic valve (210). The hydraulic valve has two alternative settings. In one setting (215), flow through the fluid line (213) from the pump (211) is directed to feed hydraulic fluid into the hydraulic actuator segment (201) at the end adjoining in the inlet segment (202). This has the effect of moving the piston (not shown) through the hydraulic actuator segment (201) towards the end adjoining the outlet segment (203). Hydraulic fluid is then driven out of the hydraulic actuator segment (201) at the end adjoining the outlet segment (203) and is fed through the fluid line (214) to the motor (212). In the other setting (216), flow through the fluid line (213) from the pump (211) is directed to feed hydraulic fluid into the hydraulic actuator segment (201) at the end adjoining in the outlet segment (203). This has the effect of moving the piston (not shown) through the hydraulic actuator segment (201) towards the end adjoining the inlet segment (202). Hydraulic fluid is then driven out of the hydraulic actuator segment (201) at the end adjoining the inlet segment (202) and is fed through the fluid line (214) to the motor (212). In order to avoid overpressure in the system a pressure relief valve (218) is connected to line (213) just after the hydraulic pump. The hydraulic system is in this case supplemented by an separate circuit with an externally cooled heat exchanger (219) and an in-line filter (220) to remove solid contaminants. Sensors to detect piston location and pressure (221) are situated at various points in both the inlet segment (202) and outlet segment (203). The inlet segment (202) is fitted with both a low pressure valve (223) and a high pressure valve (224). The outlet segment (203) is similarly fitted with both a low pressure valve (225) and a high pressure valve (226).

In some embodiments, the invention further comprises:
- a hydraulic drive system comprising a hydraulic valve with two lines in fluid communication with the hydraulic actuator segment and further comprising an electrical motor with one line in fluid communication with the hydraulic valve and a hydraulic positive displacement pump mounted on the same axle with a hydraulic motor having equivalent volume displacement capacity as the pump and having one line in fluid communication with the hydraulic valve.

In some embodiments, the pumping system is controlled by timing of the valves used for intake and outtake to and from the inlet segment (202) and for intake and outtake to and from the outlet segment (203) shown in Figure 2. Appropriate timing is determined based on measurements by the sensors (221) of the position of the piston (not shown) and on the pressure at various points within the inlet segment (202) and within the outlet segment (203). In the case of steady state operation where the mass of feed input and product oil outtake is equal, the valve timing is comparatively simple. For a given system with known dimensions and where the compressibility of feed slurry and product oil are known, the location of the piston (not shown) will precisely determine the pressure within either the inlet segment (202) or the outlet segment (203). A comparatively small piston displacement can simultaneously de-pressurize the inlet segment (202) and pressurize the outlet segment (203) and *vice versa.* In the simple case of steady state, product is removed from the outlet segment (203) by opening its high pressure valve (226) while its low pressure valve (225) is closed at a point close to when the piston is maximally displaced towards the outlet segment (203), to depressurize the product. In the inlet segment (202) at this point, both its low pressure (223) and high pressure (224) valves are closed. The input of product oil at high pressure has the beneficial effect of contributing to the hydraulic force required to move the piston back in the direction of the inlet segment (202). With the outlet segment (203) high pressure valve (226) open and its low pressure valve (225) closed, the piston moves in the direction of the inlet segment (202) and thereby pressurizes its content. At the point where the piston displacement has sufficiently pressurized the content of the inlet segment (202), its high pressure valve (224) is opened while the high pressure valve (226) on the outlet segment remains open until sufficient product has been retrieved. Further displacement of the piston towards the inlet end under these conditions drive feed slurry into the thermochemical converter at high pressure. On the "backstroke," the reverse situation applies. The low pressure valve (225) at the outlet segment (203) is opened while both the high pressure valve (224) and the low pressure valve (223) at the inlet segment (202) are closed and the piston is maximally displaced towards the inlet segment (202). Displacement of the piston towards the outlet end drives product oil out of the thermochemical converter at low pressure and simultaneously de-pressurizes the inlet segment (202). At the point where the piston displacement has sufficiently de-pressurized the inlet segment (202), its low pressure valve (223) is opened while the low pressure valve on the outlet segment (203) is then closed when the product has been delivered. Further displacement of the piston towards the outlet segment (203) under these conditions simultaneously pressurized the outlet segment (203) and fills the inlet segment (202) with feed slurry.

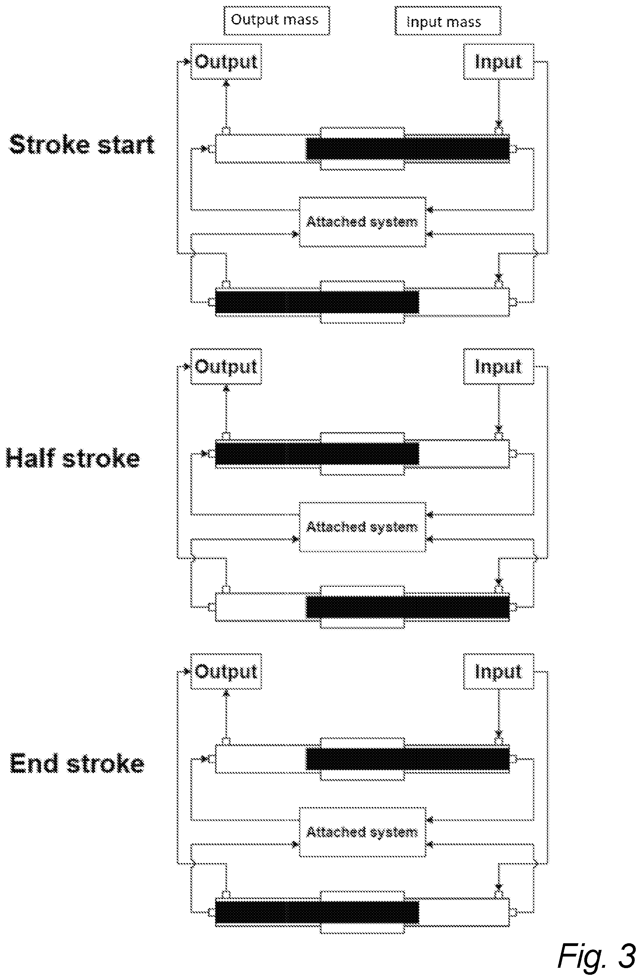

Figure 3 illustrates the operational cycle of one embodiment comprising two cylinders. A full stroke can be simplified to three steps as shown. One cylinder takes in new input mass while it delivers the output mass, meanwhile the other cylinder is delivering input mass to the attached thermochemical conversion system and simultaneously gathering output mass to prepare it for delivery. This makes it possible to move mass through the attached system (HTL) at a low energy expenditure since the pressure from the output side helps the hydraulic piston deliver input mass to the attached system (HTL). The roles for the two cylinders respectively "switch" at the half stroke point in that the cylinder which was previously being filled begins to be emptied and *vice versa.* At the end of the half stroke a full stroke is completed and the pistons are back at their starting positions. This process is then repeated.

By off-setting the cycles of the two cylinders by half a stroke it becomes possible to take mass out of the attached system with minimal change in pressure since the other cylinder replaces the output mass with new input mass, which corresponds to moving the mass in the attached system.

As will be readily understood by one skilled in the art, real world operations require more fine tuned control than can be provided in the simple steady state case alone. At some points during operation, it may be desirable to either increase or decrease the pressure within the thermochemical converter. In order to achieve this, the system can be controlled in such manner as to either increase or decrease the mass within the thermochemical conversion system at any given time.

The control to ensure stable and continued operation of the pumping system it is the opening and closing of the valves are carefully coordinated. Thereby, the connected piston may be operated so as to move forward and backward as intended. In more detail, the operation of the pumping system may be controlled by the position of the piston. Changing the position of the piston changes the amount of fluid moved through the attached system. Thereby, it allows for the pressure in the attached system to be regulated.

In some embodiments, the attached system for the pumping system may be a system for high pressure thermal processes, such as hydrothermal liquefaction (HTL), hydrothermal carbonization (HTC), or hydrothermal gasification (HTG). These types of systems comprises a pumping and take-off unit to increase and decrease pressure, respectively, a heat exchanger, and a reactor for the process. The pumping system described herein effectively comprises a pumping and take-off unit to increase and decrease pressure, respectively, and is therefore useful in the above described processes..

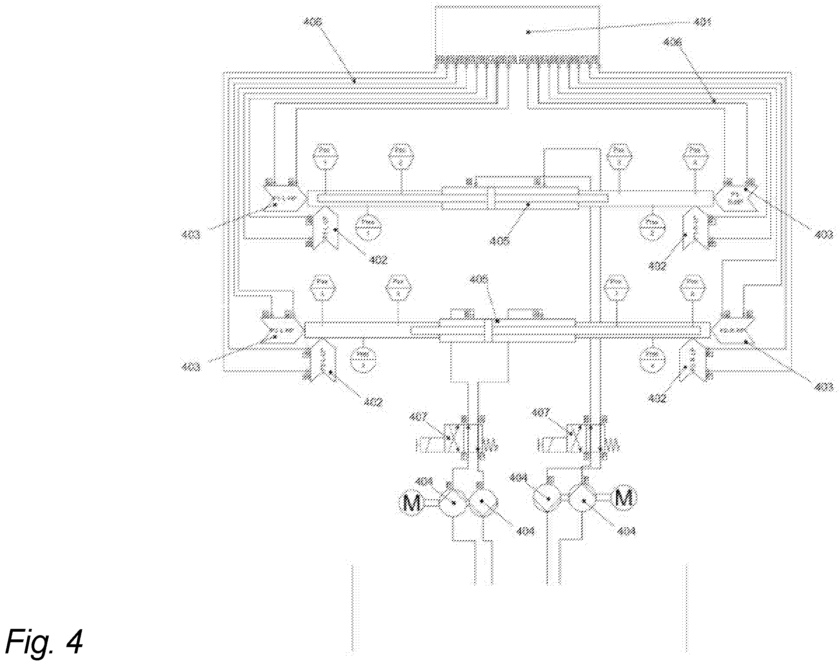

Figure 4 shows a piping and instrument design schematic for pneumatic valve actuation and hydraulic control of one embodiment of a pumping system of the invention comprising two cylinders with the corresponding four low pressure valve actuators (402) and four high pressure valve actuators (403).

The hydraulic pumps (404) control the movements of the pistons in the two cylinders (405) via the shown directional control valves (407). The eight pneumatic valve actuators are controlled via pneumatic flow lines (406) from a central valve manifold (401). In some embodiments, a pumping system of the invention may comprise two cylinder, or three cylinders, or four cylinder, or 5 cylinders. Apart from the obvious added capacity, the advantage of having several cylinders is the possibility of reducing pulsations in flow and pressure.

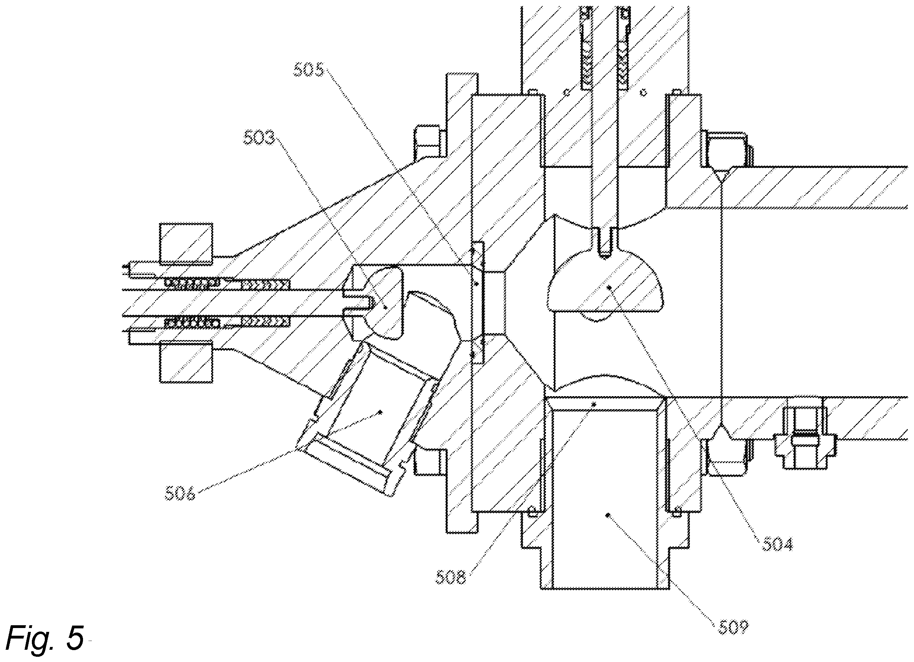

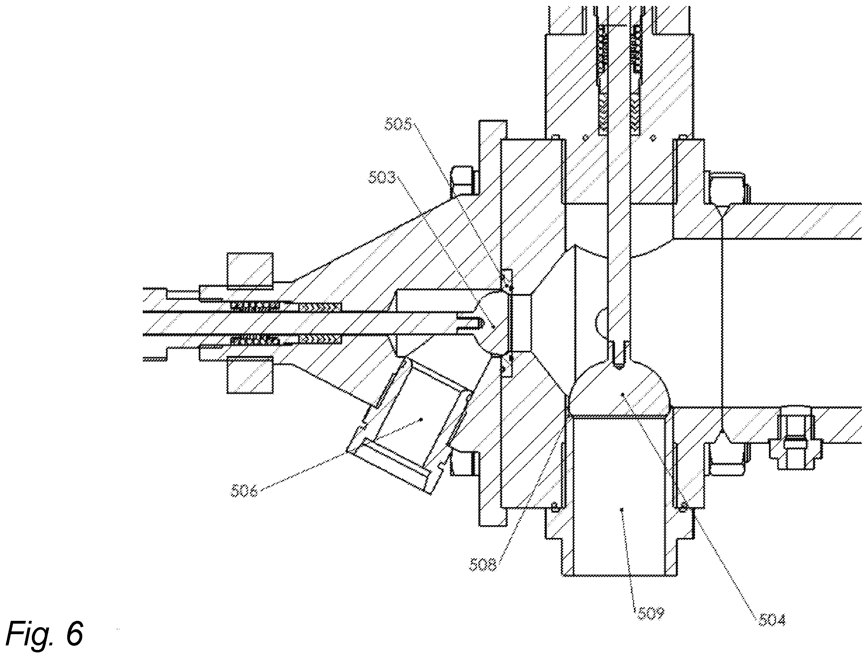

Figure 5 shows a cross section of valve heads used in some embodiments fitted with both high and low pressure valves in the open state (A) and correspondingly the cross section is shown in Figure 6 with both high and low pressure valves in the closed state (B). The high pressure valve sealing head (503) has a contour that complements the high pressure valve seat (505). When the valve is open (A), fluid flow freely through the high pressure channel (506) into or from an inlet segment or an outlet segment (507). The low pressure valve sealing head (504) similarly has a contour that complements the low pressure valve seat (508). When the valve is open (A), fluid flows through the low pressure channel (509) into or from an inlet segment or an outlet segment (507). When the valves are closed (B) as shown in Figure 6, both the high pressure channel (506) and the low pressure channel (509) are sealed.

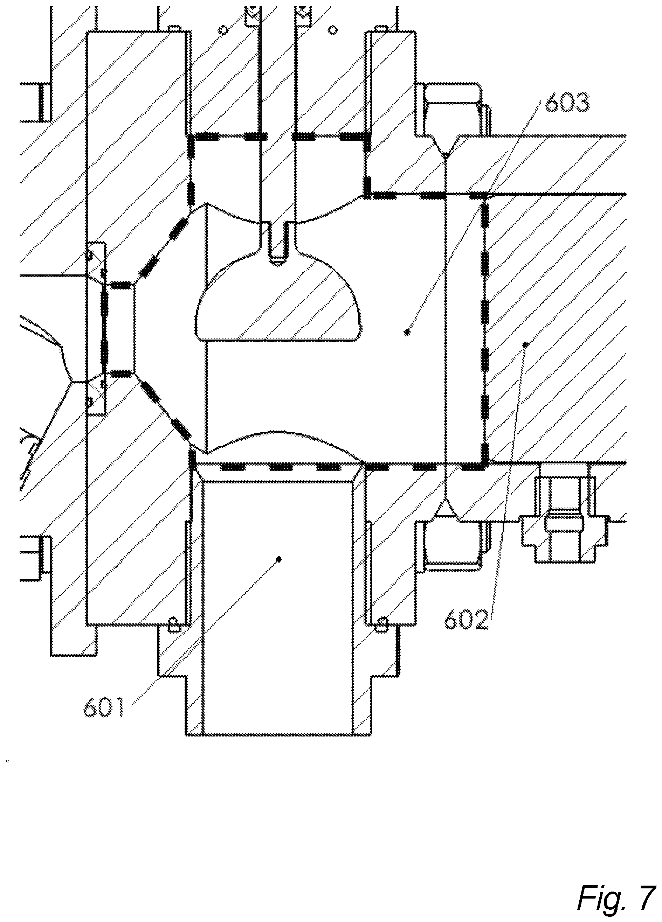

Figure 7 shows a cross section of a valve head in some embodiments. As shown, there exists a "dead volume" (603) that cannot be displaced by the piston (604). In some cases, CO2 produced during thermochemical conversion is released as pressurized gas when de-compressing product oil in the outlet segment. This typically leads to excess liquid loss. To ensure that sufficient liquid remains to fill this "dead volume," in some embodiments, the outlet lines (601) to low pressure valves on the outlet segment are turned upwards and connected to a reservoir that provides a gravity flowback of produced liquid. In a similar manner, in some embodiments, to prevent air accumulation in the inlet lines (601) to low pressure valves on the inlet segment are turned upwards to allow for the air to escape.

## Claims

1. A high pressure thermal processing system comprising a pumping system and an attached system comprising a hydrothermal biomass converter configured for processing biomass by hydrothermal liquefaction,
the pumping system comprising:
- one or more cylinders each having an inlet end and an outlet end and each having both a low pressure valve (223, 225) and a high pressure valve (224, 226) at both the inlet and the outlet end and each comprising an inner hydraulic actuator segment (1, 201) which is separated from an inlet segment (2, 202) on the inlet end and from an outlet segment (3, 203) on the outlet end by a lower-pressure zone sealed by two or more gaskets (7) and each further comprising an axially displaceable piston (5) fitted with a piston ring (6) which piston (5) is adapted to move back and forth within the hydraulic actuator segment (1, 201) so as to alternately displace volume in the inlet segment (2, 202) when piston movement is towards the inlet end and in the outlet segment (3, 203) when piston movement is towards the outlet end;
- a biomass feed input system in fluid communication with each of the low pressure valves (223, 225) at the inlet ends of the one or more cylinders; and
- a product output system in fluid communication with each of the low pressure valves (223, 225) at the outlet ends of the one or more cylinders.

2. The high pressure thermal processing system according to claim 1 adapted to pump a feed stream into and remove a product stream out from the thermochemical biomass converter pressurized to a pressure within the range 100 to 400 bar

3. The high pressure thermal processing system according to claim 1 or 2 further **characterized in** having a hydraulic drive system comprising a hydraulic valve with two lines in fluid communication with the hydraulic actuator segment with one line in fluid communication with the hydraulic valve and a hydraulic positive displacement pump mounted on the same axle with a hydraulic motor having equivalent volume displacement capacity as the pump and having one line in fluid communication with the hydraulic valve and were both the hydraulic motor and the hydraulic pump is connected via the same axle to an electrical motor.

4. The high pressure thermal processing system according to any of claims 1-3 further comprising sensors to detect piston location and pressure situated at various points in each of the one or more inlet segments and outlet segments.

5. The high pressure thermal processing system according to any of claims 1-4 further **characterized in** having intake lines to low pressure valves on each of the one or more inlet segments that are turned upwards to allow for accumulated air to escape.

6. The high pressure thermal processing system according to any of claims 1-5 further **characterized in** having outlet lines to low pressure valves on each of the one or more outlet segments that are turned upwards and connected to a reservoir that provides a gravity flowback of produced liquid.

7. The high pressure thermal processing system according to any of claims 1-6 further **characterized in that** each of the one or more cylinders is formed from a separate inlet segment and a separate outlet segment each connected to a separate intervening hydraulic actuator segment by flanges.

8. The high pressure thermal processing system according to any of claims 1-7 further **characterized in** having two cylinders.

9. The high pressure thermal processing system according to any of claims 1-8 further **characterized in** having four cylinders.

10. The high pressure thermal processing system according to any of claims 1-9 in which the displacement of liquids are achieved with a piston and a piston ring where the piston ring is a gasket with a tight fit around a smooth/polished piston rod, which has a diameter 0,1 to 2 mm smaller than the cylinder.

11. The high pressure thermal processing system according to any of claims 1-10 in which the displacement of liquids are achieved with a piston and a piston ring where the piston ring is a gasket located near the head of the piston with a tight fit towards a smooth/polished cylinder surface.

12. The high pressure thermal processing system according to any of claims 1-11, wherein the lower-pressure zone is a no-pressure zone.

## Patentansprüche

1. Thermisches Hochdruckverarbeitungssystem, umfassend ein Pumpsystem und ein angeschlossenes System, umfassend einen hydrothermalen Biomassekonverter, der zum Verarbeiten von Biomasse durch hydrothermale Verflüssigung konfiguriert ist,
das Pumpsystem umfassend:
- einen oder mehrere Zylinder, die jeweils ein Einlassende und ein Auslassende aufweisen und jeweils sowohl ein Niederdruckventil (223, 225) als auch ein Hochdruckventil (224, 226) an sowohl dem Einlass- als auch dem Auslassende aufweisen, und jeweils umfassend ein inneres hydraulisches Betätigungssegment (1, 201), das von einem Einlasssegment (2, 202) an dem Einlassende und von einem Auslasssegment (3, 203) an dem Auslassende durch eine Niederdruckzone getrennt ist, die durch zwei oder mehr Dichtungen (7) abgedichtet ist, und jeweils ferner umfassend einen axial verschiebbaren Kolben (5), der mit einem Kolbenring (6) ausgestattet ist, wobei der Kolben (5) angepasst ist, um sich innerhalb des hydraulischen Betätigungssegments (1, 201) vor und zurück zu bewegen, um abwechselnd Volumen in dem Einlasssegment (2, 202) zu verdrängen, wenn die Kolbenbewegung in Richtung des Einlassendes erfolgt, und in dem Auslasssegment (3, 203), wenn die Kolbenbewegung in Richtung des Auslassendes erfolgt;
- ein Biomassezufuhreingabesystem in Fluidverbindung mit jedem der Niederdruckventile (223, 225) an den Einlassenden des einen oder der mehreren Zylinder; und
- ein Produktausgabesystem in Fluidverbindung mit jedem der Niederdruckventile (223, 225) an den Auslassenden des einen oder der mehreren Zylinder.

2. Thermisches Hochdruckverarbeitungssystem nach Anspruch 1, das angepasst ist, um einen Zufuhrstrom in den thermochemischen Biomassekonverter, der auf einen Druck in dem Bereich von 100 bis 400 Bar gebracht wird, zu pumpen und einen Produktstrom aus diesem zu entfernen

3. Thermisches Hochdruckverarbeitungssystem nach Anspruch 1 oder 2, ferner **dadurch gekennzeichnet, dass** es ein hydraulisches Antriebssystem aufweist, umfassend ein Hydraulikventil mit zwei Leitungen in Fluidverbindung mit dem hydraulischen Betätigungssegment, wobei eine Leitung in Fluidverbindung mit dem Hydraulikventil steht, und eine Verdrängerkolbenhydraulikpumpe, die auf derselben Achse montiert ist, mit einem Hydraulikmotor, der eine äquivalente Volumenverdrängungskapazität wie die Pumpe aufweist und eine Leitung in Fluidverbindung mit dem Hydraulikventil aufweist, und wobei sowohl der Hydraulikmotor als auch die Hydraulikpumpe über dieselbe Achse mit einem Elektromotor verbunden ist.

4. Thermisches Hochdruckverarbeitungssystem nach einem der Ansprüche 1 bis 3, ferner umfassend Sensoren, um eine Kolbenposition und einen Druck zu erfassen, die an verschiedenen Punkten in jedem des einen oder der mehreren Einlasssegmente und Auslasssegmente positioniert sind.

5. Thermisches Hochdruckverarbeitungssystem nach einem der Ansprüche 1 bis 4, ferner **dadurch gekennzeichnet, dass** es Ansaugleitungen zu Niederdruckventilen an jedem des einen oder der mehreren Einlasssegmente aufweist, die nach oben gerichtet sind, um zu ermöglichen, dass angesammelte Luft entweicht.

6. Thermisches Hochdruckverarbeitungssystem nach einem der Ansprüche 1 bis 5, ferner **dadurch gekennzeichnet, dass** es Auslassleitungen zu Niederdruckventilen an jedem des einen oder der mehreren Auslasssegmente aufweist, die nach oben gerichtet und mit einem Reservoir verbunden sind, das einen Rückfluss von produzierter Flüssigkeit durch Schwerkraft bereitstellt.

7. Thermisches Hochdruckverarbeitungssystem nach einem der Ansprüche 1 bis 6, ferner **dadurch gekennzeichnet, dass** jeder des einen oder der mehreren Zylinder aus einem separaten Einlasssegment und einem separaten Auslasssegment ausgebildet ist, die jeweils durch Flansche mit einem separaten dazwischenliegenden hydraulischen Betätigungssegment verbunden sind.

8. Thermisches Hochdruckverarbeitungssystem nach einem der Ansprüche 1 bis 7, ferner **dadurch gekennzeichnet, dass** es zwei Zylinder aufweist.

9. Thermisches Hochdruckverarbeitungssystem nach einem der Ansprüche 1 bis 8, ferner **dadurch gekennzeichnet, dass** es vier Zylinder aufweist.

10. Thermisches Hochdruckverarbeitungssystem nach einem der Ansprüche 1 bis 9, bei dem die Verdrängung von Flüssigkeiten mit einem Kolben und einem Kolbenring erreicht wird, wobei der Kolbenring eine Dichtung mit einem festem Sitz um eine glatte/polierte Kolbenstange ist, deren Durchmesser 0,1 bis 2 mm kleiner als der Zylinder ist.

11. Thermisches Hochdruckverarbeitungssystem nach einem der Ansprüche 1 bis 10, bei dem die Verdrängung von Flüssigkeiten mit einem Kolben und einem Kolbenring erreicht wird, wobei der Kolbenring eine Dichtung ist, die sich in der Nähe des Kolbenkopfes befindet, mit einem festen Sitz an einer glatten/polierten Zylinderoberfläche.

12. Thermisches Hochdruckverarbeitungssystem nach einem der Ansprüche 1 bis 11, wobei die Niederdruckzone eine drucklose Zone ist.

## Revendications

1. Système de traitement thermique à haute pression comprenant un système de pompage et un système annexe comprenant un convertisseur de biomasse hydrothermique conçu pour traiter une biomasse par liquéfaction hydrothermale,
le système de pompage comprenant :
- un ou plusieurs cylindres ayant chacun une extrémité d'entrée et une extrémité de sortie et ayant chacun une soupape basse pression (223, 225) et une soupape haute pression (224, 226) à la fois au niveau des extrémités d'entrée et de sortie et comprenant chacun un segment d'actionneur hydraulique (1, 201) interne qui est séparé d'un segment d'entrée (2, 202) sur l'extrémité d'entrée et d'un segment de sortie (3, 203) sur l'extrémité de sortie par une zone de pression inférieure scellée par deux ou plusieurs joints (7) et comprenant chacun en outre un piston (5) pouvant se déplacer axialement équipé d'un segment de piston (6), le piston (5) est adapté pour se déplacer d'avant en arrière à l'intérieur du segment d'actionneur hydraulique (1, 201) afin de déplacer alternativement un volume dans le segment d'entrée (2, 202) lorsque le déplacement de piston se fait vers l'extrémité d'entrée et dans le segment de sortie (3, 203) lorsque le déplacement de piston se fait vers l'extrémité de sortie ;
- un système d'entrée d'alimentation en biomasse en communication fluidique avec chacune des soupapes basse pression (223, 225) au niveau des extrémités d'entrée du ou des cylindres ; et
- un système de sortie de produit en communication fluidique avec chacune des soupapes basse pression (223, 225) au niveau des extrémités de sortie du ou des cylindres.

2. Système de traitement thermique à haute pression selon la revendication 1, adapté pour pomper un flux d'alimentation dans et évacuer un flux de produit hors du convertisseur de biomasse thermochimique pressurisé à une pression comprise à l'intérieur de la plage allant de 100 à 400 bars.

3. Système de traitement thermique à haute pression selon la revendication 1 ou 2, en outre **caractérisé en ce qu'**il a un système d'entraînement hydraulique comprenant une soupape hydraulique avec deux conduites en communication fluidique avec le segment d'actionneur hydraulique avec une conduite en communication fluidique avec la soupape hydraulique et une pompe volumétrique hydraulique montée sur le même essieu avec un moteur hydraulique qui a une capacité de déplacement volumétrique équivalente à celle de la pompe et a une conduite en communication fluidique avec la soupape hydraulique et dans lequel le moteur hydraulique et la pompe hydraulique sont tous deux connectés par l'intermédiaire du même essieu à un moteur électrique.

4. Système de traitement thermique à haute pression selon l'une quelconque des revendications 1 à 3 comprenant en outre des capteurs destiné à détecter un emplacement de piston et une pression située au niveau de divers points dans chacun du ou des segments d'entrée et segments de sortie.

5. Système de traitement thermique à haute pression selon l'une quelconque des revendications 1 à 4, en outre **caractérisé en ce qu'**il a des conduites d'admission vers des soupapes basse pression sur chacun du ou des segments d'entrée qui sont tournés vers le haut pour permettre à de l'air accumulé de s'échapper.

6. Système de traitement thermique à haute pression selon l'une quelconque des revendications 1 à 5, en outre **caractérisé en ce qu'**il a des conduites de sortie vers des soupapes basse pression sur chacun du ou des segments de sortie qui sont tournés vers le haut et reliés à un réservoir qui fournit un reflux par gravité de liquide produit.

7. Système de traitement thermique à haute pression selon l'une quelconque des revendications 1 à 6, en outre **caractérisé en ce que** chacun du ou des cylindres est formé à partir d'un segment d'entrée séparé et d'un segment de sortie séparé, chacun étant relié à un segment d'actionneur hydraulique intermédiaire séparé par des brides.

8. Système de traitement thermique à haute pression selon l'une quelconque des revendications 1 à 7, en outre **caractérisé en ce qu'**il a deux cylindres.

9. Système de traitement thermique à haute pression selon l'une quelconque des revendications 1 à 8, en outre **caractérisé en ce qu'**il a quatre cylindres.

10. Système de traitement thermique à haute pression selon l'une quelconque des revendications 1 à 9, dans lequel le déplacement de liquides est assuré à l'aide d'un piston et d'un segment de piston, dans lequel le segment de piston est un joint bien ajusté autour d'une tige de piston lisse/polie, qui a un diamètre inférieur de 0,1 à 2 mm à celui du cylindre.

11. Système de traitement thermique à haute pression selon l'une quelconque des revendications 1 à 10, dans lequel le déplacement de liquides est assuré à l'aide d'un piston et d'un segment de piston, dans lequel le segment de piston est un joint situé près de la tête du piston avec un ajustement serré vers une surface de cylindre lisse/polie.

12. Système de traitement thermique à haute pression selon l'une quelconque des revendications 1 à 11, dans lequel la zone de pression inférieure est une zone sans pression.
